# EUROPÄISCHE PATENTSCHRIFT

(11) **EP 1 910 000 B1**
(45) Veröffentlichungstag und Bekanntmachung des Hinweises auf die Patenterteilung: **05.11.2008**
(21) Anmeldenummer: 06705923.8
(22) Anmeldetag: 07.02.2006
(51) Int. Cl.: B23B 29/24, B23Q 5/04

(54) **WERKZEUGREVOLVER MIT EINEM DREHANTREIBBAREN WERKZEUG AN DER STIRNSEITE**
TOOL REVOLVER WITH A ROTATIONALLY DRIVABLE TOOL ON THE FRONT FACE
TOURELLE REVOLVER POUR OUTILLAGE DOTEE D'UN OUTIL ENTRAINE EN ROTATION SUR SA FACE FRONTALE

(30) Priorität: 01.03.2005 DE 102005009893
(43) Veröffentlichungstag der Anmeldung: 16.04.2008
(73) Patentinhaber: EMAG Holding GmbH, 73084 Salach (DE)
(72) Erfinder: HESSBRÜGGEN, Norbert, 73084 Salach (DE); HESSBRÜGGEN, Markus, 73035 Göppingen (DE)
(86) Internationale Anmeldenummer: PCT/DE2006/000195
(87) Internationale Veröffentlichungsnummer: WO 2006/092110

(56) Entgegenhaltungen:
- EP-A- 1 291 101
- US-A- 5 125 142
- US-A1- 2002 170 397

## Beschreibung

Die Erfindung betrifft eine Werkzeugmaschine mit einem Werkzeugrevolver nach dem Oberbegriff von Anspruch 1 (siehe, z.B., US- 5,125,142-A). Aus der DE 298 07 842 U1 ist ein Werkzeugrevolver mit Schneidwerkzeugen zum Drehen und antreibbaren Werkzeugen zum Bohren oder Schleifen bekannt.

Ein Werkzeugrevolver mit Direktantrieb für die Schwenkbewegung ist aus der DE 199 19 553 A1 bekannt. Bei beiden Werkzeugrevolvern sind die Werkzeuge in einer Revolverscheibe angeordnet. Die angetriebenen Werkzeuge werden über ein Winkelgetriebe durch die Revolverscheibe hindurch angetrieben. Wegen der begrenzten Platzverhältnisse ist die maximale Antriebsleistung für die Werkzeuge und damit auch die Größe von einsetzbaren Schleifwerkzeugen deutlich eingeschränkt.

Es besteht daher die Aufgabe, eine Werkzeugmaschine mit einem Werkzeugrevolver so auszubilden, dass der Antrieb für die Werkzeuge bei verringertem Platzbedarf kostengünstig und einfach ausgeführt werden kann.

Gelöst wird diese Aufgabe mit einer Werkzeugmaschine nach Anspruch 1. Vorteilhafte Ausgestaltungen sind den jeweiligen Unteransprüchen entnehmbar.

Der Kerngedanke der Erfindung besteht darin, das angetriebene Werkzeug an der Stirnseite des Werkzeugträgers anzuordnen. Dabei erfolgt der Antrieb ohne Umlenkung und mechanische Zwischenglieder, wie z.B. Winkelgetriebe, durch den Werkzeugträger hindurchgeführt werden und die begrenzten Platzverhältnisse im Werkzeugträger haben keinen Einfluss mehr auf die Auslegung des Antriebs. Zudem wird das angetriebene Werkzeug bei den Schwenkbewegungen des Werkzeugträgers nicht mitbewegt. Dies erlaubt höhere Beschleunigungen beim Werkzeugwechsel und verkürzt die für die Bearbeitung eines Werkstücks erforderliche Zeit.

Bei einer vorteilhaften Ausführung ist der Werkzeugträger mit einer Hohlwelle drehfest verbunden. Im Innern der Hohlwelle ist die Spindel für den Werkzeugantrieb gelagert. An ihrer Außenseite nimmt die Hohlwelle einen Ringmotor zum Antrieb für die Schwenkbewegungen des Werkzeugträgers auf. Bei einer weiteren Ausführung ist der Innendurchmesser der Hohlwelle so gewählt, dass der Antriebsmotor für das Werkzeug im Inneren der Hohlwelle angeordnet werden kann.

Im Folgenden wird die Erfindung an Hand von Ausführungsbeispielen näher erläutert.
- Fig. 1: zeigt eine Werkzeugmaschine mit zwei Werkzeugrevolvern
- Fig. 2: zeigt einen Werkzeugrevolver teilweise geschnitten
- Fig. 3: zeigt einen Werkzeugrevolver mit in der Hohlwelle angeordnetem Antriebsmotor teilweise geschnitten

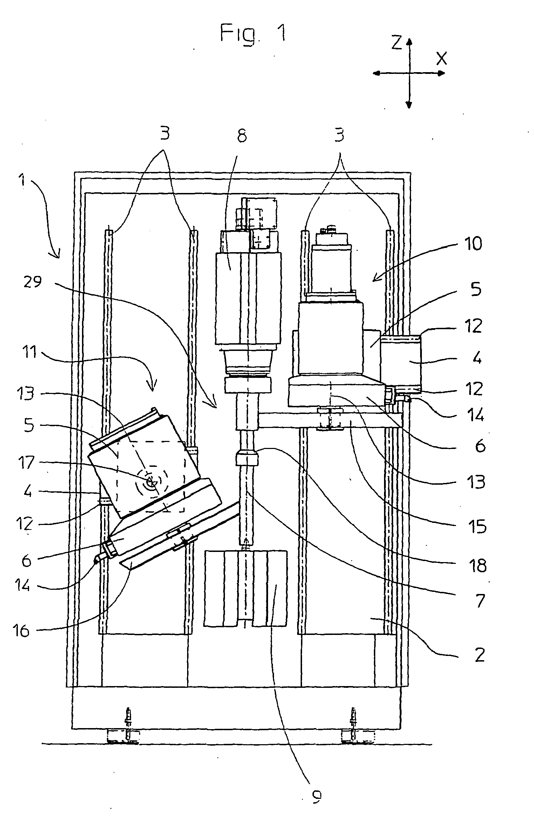

Fig. 1 zeigt eine Werkzeugmaschine 1, bei welcher nicht erfindungswesentliche Details der Werkstückzuführung, des Antriebs, der Steuerung und des Gehäuses nicht dargestellt sind. Die beschriebene Werkzeugmaschine 1 eignet sich insbesondere zur Bearbeitung wellenförmiger Werkstücke 7. Diese werden in der Werkstückhaltevorrichtung 29, bestehend aus der Motorspindel 8 und dem Reitstock 9 eingespannt und in Rotation versetzt. Die beiden Werkzeugrevolver 10 und 11 sind am Maschinengestell 2 in zwei zueinander orthogonalen Richtungen (X- und Z-Achse) beweglich geführt. Dazu sind am Maschinengestell 2 vertikale Führungen 3 für die Vertikalschlitten 4 vorgesehen und diese tragen ihrerseits Führungen 12 für die Horizontalschlitten 5. In den Horizontalschlitten 5 sind die Werkzeugträger 6 um eine Schwenkachse 13 drehbar gelagert. Die Werkzeugträger 6 nehmen feststehende Werkzeuge 14, insbesondere zum Drehen, auf. An den Stirnseiten der Werkzeugträger 6 sind angetriebene Werkzeuge 15, 16 angeordnet. Das Werkzeug 16 ist als konische Schleifscheibe ausgeführt. Daher ist am Werkzeugrevolver 11 eine Schwenkachse 17 vorgesehen, damit die Spindel des Werkzeugs 16 gegenüber dem Werkstück 7 dem Konuswinkel entsprechend geneigt werden kann. Mit dieser Anordnung lassen sich ebenso konische Flächen 18 am Werkstück 8 bearbeiten.

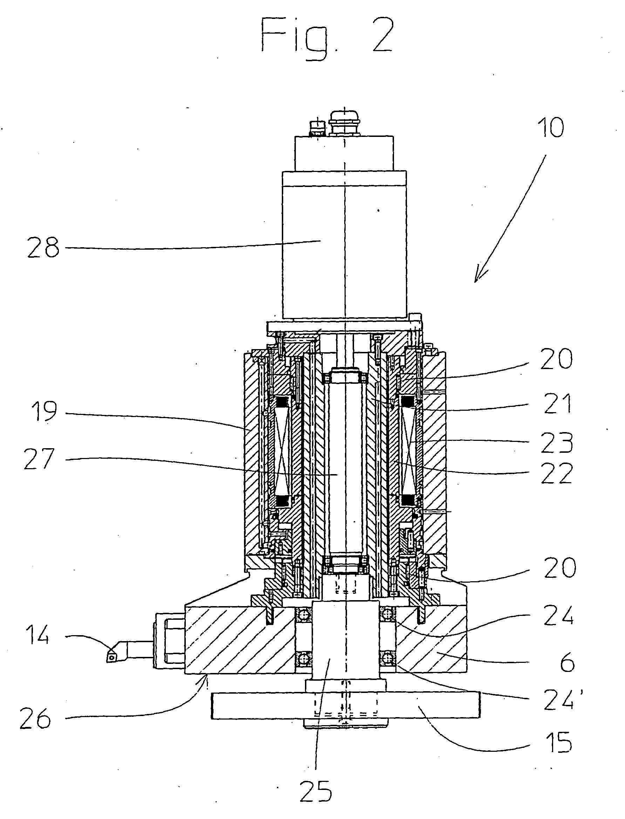

Fig. 2 zeigt den Werkzeugrevolver 10, teilweise geschnitten. Das Gehäuse 19 kann maschinenfest, oder wie in Fig. 1 dargestellt, auf einem Schlitten angeordnet sein. Im Gehäuse 19 ist mit den Lagern 20, 20' die Hohlwelle 21 gelagert. Darauf ist außen der aus Einzelmagneten zusammengesetzte Rotor 22 befestigt. Diesem ist im Gehäuse 19 ein elektrische Windungen aufweisender Stator 23 zugeordnet. Der Werkzeugträger 6 ist fest mit der Hohlwelle 21 verschraubt. Rotor 22 und Stator 23 bilden zusammen einen Ringmotor, der als Antrieb für die Schwenkbewegungen des Werkzeugträgers 6 dient. Der Werkzeugträger 6 ist als Scheibe ausgeführt, die an ihrer Umfangsfläche Werkzeuge 14, insbesondere zum Drehen, aufnimmt. Im Zentrum des Werkzeugträgers 6 befinden sich die Lager 24, 24' für die Spindel 25 des angetriebenen Werkzeugs 15. Das Werkzeug 15 ist an der Stirnseite des Werkzeugträgers 6 angeordnet. Die Spindel 25 ist durch die Hohlwelle 21 hindurch über die Welle 27 direkt mit dem Motor 28 verbunden. Bei dieser Anordnung haben die begrenzten Platzverhältnisse im Werkzeugträger 6 keinen Einfluss mehr auf die Auslegung des Antriebs. Zudem wird das angetriebene Werkzeug 15 bei den Schwenkbewegungen des Werkzeugträgers 6 nicht mitbewegt. Dies erlaubt höhere Beschleunigungen beim Werkzeugwechsel und ermöglicht kürzere Zykluszeiten für die für die Bearbeitung der Werkstücke 7.

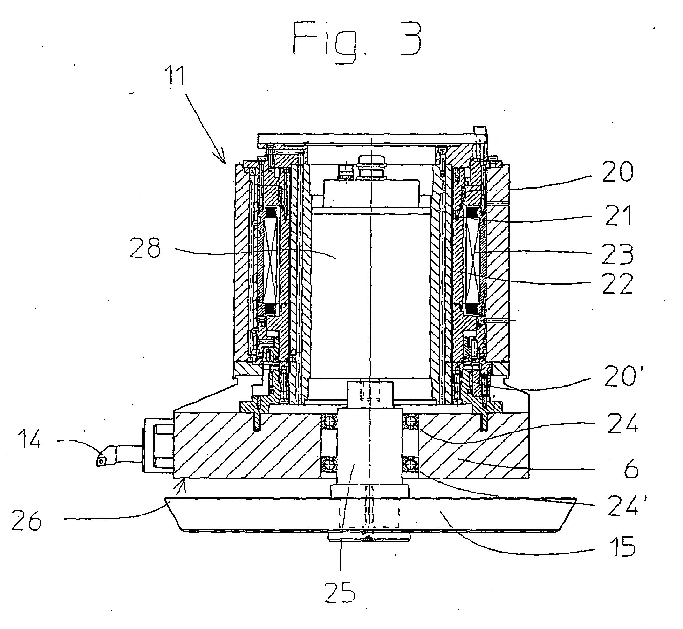

Bei der Ausführung nach Fig. 3 ist der Innendurchmesser der Hohlwelle 21 so dimensioniert, dass der Motor 28 zum Antrieb des Werkzeugs 16 im Inneren der Hohlwelle 21 Platz findet. Bei dieser platzsparenden Anordnung ist Spindel 25 für das Werkzeug 15 direkt mit dem Motor 28 verbunden. Gehäuse 19, Werkzeugträger 6 und Schwenkantrieb mit Ringmotor sind analog zur Beschreibung der Ausführung nach Fig. 2 angeordnet.

### Bezugszeichen

- 1: Werkzeugmaschine
- 2: Maschinengestell
- 3: Führung
- 4: Vertikalschlitten
- 5: Horizontalschlitten
- 6: Werkzeugträger
- 7: Werkstück
- 8: Motorspindel
- 9: Reitstock
- 10: Werkzeugrevolver
- 11: Werkzeugrevolver
- 12: Führung
- 13: Schwenkachse
- 14: Werkzeug
- 15: Werkzeug
- 16: Werkzeug
- 17: Schwenkachse
- 18: konische Fläche
- 19: Gehäuse
- 20 20': Lager
- 21: Hohlwelle
- 22: Rotor
- 23: Stator
- 24 24': Lager
- 25: Spindel
- 26: Stirnseite
- 27: Welle
- 28: Motor
- 29: Werkstückhaltevorrichtung

## Patentansprüche

1. Werkzeugmaschine mit mindestens einem Werkzeugrevolver (10, 11), mit einem drehbar gelagerten Werkzeugträger (6), der mittels eines Schwenkantriebes in die jeweilige Arbeitsstellung für ein Werkzeug verschwenkbar ist mit feststehenden Werkzeugen (14), mindestens einem motorisch drehantreibbaren Werkzeug (15, 16), das an der Stirnseite des Werkzeugträgers (6) angeordnet ist und einem diesem zugeordneten Motor (28)
**dadurch gekennzeichnet,**
**dass** der Antrieb des drehantreibbaren Werkzeuges (15, 16) ohne Umlenkung und mechanische Zwischenglieder durch den Werkzeugträger (6) hindurch erfolgt und dass die Spindel (25) für das Werkzeug (15, 16) direkt mit dem Motor (28) verbunden ist.

2. Werkzeugmaschine nach Anspruch 1, **dadurch gekennzeichnet, dass** das drehantreibbare Werkzeug (15, 16) im Zentrum des Werkzeugträgers (6) gelagert ist.

3. Werkzeugmaschine nach Anspruch 2, **dadurch gekennzeichnet, dass** der Werkzeugträger (6) mit einer Hohlwelle (21) drehfest verbunden und durch diese drehbar gelagert ist.

4. Werkzeugmaschine nach Anspruch 3, **dadurch gekennzeichnet, dass** in der Hohlwelle (21) Mittel für den Antrieb des drehantreibbaren Werkzeugs (15, 16) angeordnet sind.

5. Werkzeugmaschine nach einem der Ansprüche 1 bis 4, **dadurch gekennzeichnet, dass** das drehantreibbare Werkzeug (15, 16) ein Schleifwerkzeug ist.

6. Werkzeugmaschine nach Anspruch 1 mit einer Werkstückhaltevorrichtung (29), **dadurch gekennzeichnet, dass** der Werkzeugrevolver (10, 11) und die Werkstückhaltevorrichtung (29) am Maschinengestell (2) relativ zueinander in zwei zueinander orthogonalen Richtungen verfahrbar angeordnet sind.

7. Werkzeugmaschine nach Anspruch 6, **dadurch gekennzeichnet, dass** der Werkzeugrevolver (10, 11) und die Werkstückhaltevorrichtung (29) am Maschinengestell (2) relativ zueinander um eine Schwenkachse (17) schwenkbar angeordnet sind.

## Claims

1. Machine tool having at least one tool turret (10, 11) comprising a rotatably mounted tool carrier (6) which can be swivelled into the respective working position for a tool by means of a swivel drive, comprising fixed tools (14), at least one tool (15, 16) which can be motor-driven rotationally and which is arranged on the end face of the tool carrier (6), and a motor (28) assigned to said tool carrier (6), **characterized in that** the drive of the tool (15, 16) which can be driven rotationally is effected through the tool carrier (6) without deflection and without mechanical intermediate members, and **in that** the spindle (25) for the tool (15, 16) is directly connected to the motor (28).

2. Machine tool according to Claim 1, **characterized in that** the tool (15, 16) which can be driven rotationally is mounted in the centre of the tool carrier (6).

3. Machine tool according to Claim 2, **characterized in that** the tool carrier (6) is connected to a hollow shaft (21) in a rotationally fixed manner and is rotatably mounted by said hollow shaft (21).

4. Machine tool according to Claim 3, **characterized in that** means for the drive of the tool (15, 16) which can be driven rotationally are arranged in the hollow shaft (21).

5. Machine tool according to one of Claims 1 to 4, **characterized in that** the tool (15, 16) which can be driven rotationally is a grinding tool.

6. Machine tool according to Claim 1 having a work-holding device (29), **characterized in that** the tool turret (10, 11) and the work-holding device (29) are arranged on the machine frame (2) such as to be traversable relative to one another in two directions orthogonal to one another.

7. Machine tool according to Claim 6, **characterized in that** the tool turret (10, 11) and the work-holding device (29) are arranged on the machine frame (2) such as to be swivellable relative to one another about a swivel axis (17).

## Revendications

1. Machine-outil comprenant au moins une tourelle revolver pour outil (10, 11), comprenant un porte-outil (6) monté à rotation, qui peut pivoter au moyen d'un entraînement de pivotement dans la position de travail respective pour un outil, avec des outils fixes (14), au moins un outil (15, 16) pouvant être entraîné en rotation par un moteur, qui est disposé sur le côté frontal du porte-outil (6) et un moteur qui lui est associé (28),
**caractérisée en ce que**
l'entraînement de l'outil (15, 16) pouvant être entraîné en rotation s'effectue sans déviation ni organes mécaniques intermédiaires à travers le porte-outil (6) et **en ce que** la broche (25) pour l'outil (15, 16) est directement connectée au moteur (28).

2. Machine-outil selon la revendication 1, **caractérisée en ce que** l'outil (15, 16) pouvant être entraîné en rotation est monté au centre du porte-outil (6).

3. Machine-outil selon la revendication 2, **caractérisée en ce que** le porte-outil (6) est connecté de manière solidaire en rotation à un arbre creux (21) et est monté à rotation par le biais de celui-ci.

4. Machine-outil selon la revendication 3, **caractérisée en ce que** des moyens sont prévus dans l'arbre creux (21) pour entraîner l'outil (15, 16) pouvant être entraîné en rotation.

5. Machine-outil selon l'une quelconque des revendications 1 à 4, **caractérisée en ce que** l'outil (15, 16) pouvant être entraîné en rotation est un outil de meulage.

6. Machine-outil selon la revendication 1, comprenant un dispositif porte-pièce (29), **caractérisée en ce que** la tourelle revolver pour outil (10, 11) et le dispositif porte-pièce (29) sont disposés de manière déplaçable l'un par rapport à l'autre sur le bâti de la machine (2) dans deux directions perpendiculaires.

7. Machine-outil selon la revendication 6, **caractérisée en ce que** la tourelle revolver pour outil (10, 11) et le dispositif porte-pièce (29) sont disposés de manière à pouvoir pivoter l'un par rapport à l'autre sur le bâti de la machine (2) autour d'un axe de pivotement (17).
